# EUROPÄISCHE PATENTANMELDUNG

(11) **EP 1 619 778 A1**
(43) Veröffentlichungstag der Anmeldung: **25.01.2006**
(21) Anmeldenummer: 04017533.3
(22) Anmeldetag: 23.07.2004
(51) Int. Cl.: H02K 15/16, H02K 7/04, H02K 3/48

(54) **Verfahren zum Wuchten eines Rotors für einen elektromotorischen Antrieb**

(71) Anmelder: SIEMENS AKTIENGESELLSCHAFT, 80333 München (DE)
(72) Erfinder: Hessdörfer, Robert, 97753 Karlstadt-Stetten (DE)

(57) **Zusammenfassung**

Die Erfindung betrifft ein Verfahren zum Wuchten eines Rotors für einen elektromotorischen Antrieb. Darüber hinaus betrifft die Erfindung eine Vorrichtung zum Wuchten eines solchen Rotors sowie einen derart ausgestalteten Rotor. Um das Wuchten eines Rotors für einen elektromotorischen Antrieb zu vereinfachen wird das Anbringen einer elektrisch wirkungslosen Ausgleichswicklung (7, 8, 11, 12, 13) an dem Rotor (1) vorgeschlagen.

## Beschreibung

Die Erfindung betrifft ein Verfahren zum Wuchten eines Rotors für einen elektromotorischen Antrieb. Darüber hinaus betrifft die Erfindung eine Vorrichtung zum Wuchten eines solchen Rotors sowie einen derart ausgestalteten Rotor.

Bei dem Anbringen der Motorwicklung auf einem Rotor für elektromotorische Antriebe erzeugen undefinierte Überlagerungen der einzelnen Wickelspulen und Wicklungsdrähte eine Unwucht. Rotoren müssen daher nach Aufbringen der Motorwicklung gewuchtet werden, um den Unwuchtforderungen an das Endgerät zu genügen und die geforderte Lebensdauer zu erreichen. Hierzu stehen unterschiedliche Wuchtverfahren zur Verfügung. Beim positiven Wuchten herkömmlicher Art wird die Unwucht durch Aufbringen eines oder mehrerer zusätzlicher Gewichte, beispielsweise in Form eines so genannten Wuchtkitts, beseitigt. Beim negativen Wuchten erfolgt eine Materialentnahme, beispielsweise durch Fräsen am Rotorkern.

Das positive Wuchten ist zumeist ein manueller Arbeitsgang, bei dem die Unwucht auf Unwuchtmessständen vermessen wird und im Anschluss daran der Rotor durch Aufbringen eines Ausgleichsgewichts, zumeist eines Zweikomponenten-Wuchtkitts, nach Vorgabe gewuchtet wird. Hierbei wird der Wuchtkitt an die vom Messstand ermittelte Stelle aufgebracht und in die Motorwicklung eingedrückt. Anschließend wird ein Kontrolllauf durchgeführt. Der Wuchtkitt ist erst nach einigen Stunden komplett ausgehärtet, so dass der Rotor nicht sofort weiterverarbeitet werden kann.

Aufgabe der vorliegenden Erfindung ist es, das Wuchten eines Rotors für einen elektromotorischen Antrieb zu vereinfachen.

Diese Aufgabe wird durch ein Verfahren nach Anspruch 1 bzw. eine Vorrichtung nach Anspruch 8 gelöst.

Ein Kerngedanke der Erfindung besteht darin, kein zusätzliches, schwer handhabbares Material zum Wuchten zu verwenden. Anstelle beispielsweise eines Zweikomponenten-Wuchtkitts, der eine kühle Lagerung erfordert und bisher nicht automatisiert verarbeitet werden kann, wird einfach eine elektrisch wirkungslose Ausgleichswicklung am Rotor angebracht. Hierdurch können Unwuchten, die sich durch Überlagerungen der einzelnen Wickelspulen ergeben, auf einfache Art und Weise eliminiert werden. Insbesondere gestattet es diese Grundidee, das Anbringen der Ausgleichswicklung vollautomatisch durchzuführen. Hierdurch wird eine manuelle Bedienung des Wuchtarbeitsplatzes vollständig eingespart, was ein sehr kostengünstiges Wuchten ermöglicht. Bei Verwendung einer entsprechend präzisen Vorrichtung zum Wuchten kann das Anbringen der Ausgleichswicklung äußerst genau erfolgen, so dass die Motorqualität gegenüber dem Stand der Technik erheblich verbessert und die Lebensdauer des Motors verlängert werden kann. Zudem ist eine sofortige Weiterverarbeitung des gewickelten Rotors bzw. eine Verkettung der Rotor- und der Endmontagelinie möglich.

Gemäß einer Ausführungsform der Erfindung erfolgt das Anbringen der Ausgleichswicklung, nachdem die Motorwicklung angebracht wurde und ein Messen der Unwucht erfolgt ist. Mit anderen Worten wird dann die Augleichswicklung an einer Stelle des Rotors angebracht derart, dass die tatsächlich ermittelte Unwucht eliminiert wird.

In einer weiteren Ausführungsform erfolgt das Anbringen der Ausgleichwicklung bereits, bevor die Motorwicklung angebracht wird. Hierbei wird davon ausgegangen, dass es zu Überlagerungen der einzelnen Wickelspulen der Motorwicklung an bestimmten, durch Berechnungen oder vorherige Messreihen ermittelbaren Positionen kommt. Mit anderen Worten wird hier eine zu erwartende Unwucht bereits im Vorfeld ausgeglichen.

Diese beiden Ansätze, also Anbringen von Ausgleichswicklungen vor und nach dem Anbringen der Motorwicklung, können auch miteinander kombiniert werden. Vorzugsweise geschieht dies derart, dass zunächst ein vorheriges Anbringen einer oder mehrerer Ausgleichswicklungen an dem Rotor erfolgt und nach dem Anbringen der Motorwicklung lediglich noch einmal ein Testlauf erfolgt, bei dem festgestellt wird, ob eine Unwucht vorhanden ist. Sollte dies tatsächlich der Fall sein, so werden dann eine oder mehrere weitere Ausgleichswicklungen angebracht.

Die Enden der Ausgleichswicklung sind, damit diese keine elektrische Wirkung hat, gemäß einer weiteren Ausführungsform der Erfindung an einem Isolierendstern oder dergleichen angebracht. Der Isolierendstern ist ein aus einem elektrisch isolierenden Material, insbesondere in einem Kunststoff-Spritzgießverfahren, hergestelltes Bauteil. Dieses Bauteil deckt jeweils eine Stirnseite des Rotorpaketes ab, ist der Kontur der Rotorzähne oder Paketarme angeglichen und ragt, je nach Ausführung, ggf. in die Nuten des Rotor-Blechpaketes hinein. Der Isolierendstern dient in erster Linie zur Sicherstellung der Isolation zwischen Rotor-Blechpaket und Wicklung. Zur Fixierung der Enden der Ausgleichswicklungen weist dieser vorteilhafterweise ein entsprechend ausgebildetes Halteelement auf.

Die Enden der Ausgleichswicklung können in geeigneter Form am Rotor bzw. am Isolierendstern befestigt werden (verdrillen, klemmen, einhaken) oder gegeneinander verdrillt sein.

Wird die Ausgleichswicklung in einer besonderen Art und Weise ausgeführt, kann sie zur Fixierung der Motorwicklung im Rotorkern dienen. Dies ist insbesondere dann der Fall, wenn die Ausgleichswicklung ein- oder mehrmals umlaufend am Rotorkern angebracht wird. Bei der Ausführungsform erfolgt der Unwuchtausgleich vorzugsweise dadurch, dass die Ausgleichswicklung an bestimmten Stellen mehrfach gewickelt wird.

Erfolgt das Anbringen der Ausgleichswicklung mit dem gleichen Material, welches auch zum Anbringen der Motorwicklung verwendet wird, kann das Wuchten besonders schnell durchgeführt werden, da kein Materialtausch vorgenommen werden muss. Besonders vorteilhaft ist es zudem, wenn zum Anbringen der Ausgleichswicklung und der Motorwicklung ein und dieselbe Maschine verwendet wird.

Durch den Einsatz einer gesonderten Maschine kann die Ausgleichswicklung mit frei wählbaren Drahtdurchmessern und Drahtqualitäten hergestellt werden. Dies kann in- und/oder offline durchgeführt werden.

Die Erfindung wird nachfolgend an Hand eines Ausführungsbeispiels näher erläutert, dass mit Hilfe der Figuren beschrieben wird. Hierbei zeigen:
- FIG 1: eine Draufsicht auf einen Rotor mit Ausgleichswicklungen,
- FIG 2: eine Schnittdarstellung entlang der Linie II-II aus FIG 1,
- FIG 3: eine Detailansicht des Rotors aus FIG 1.

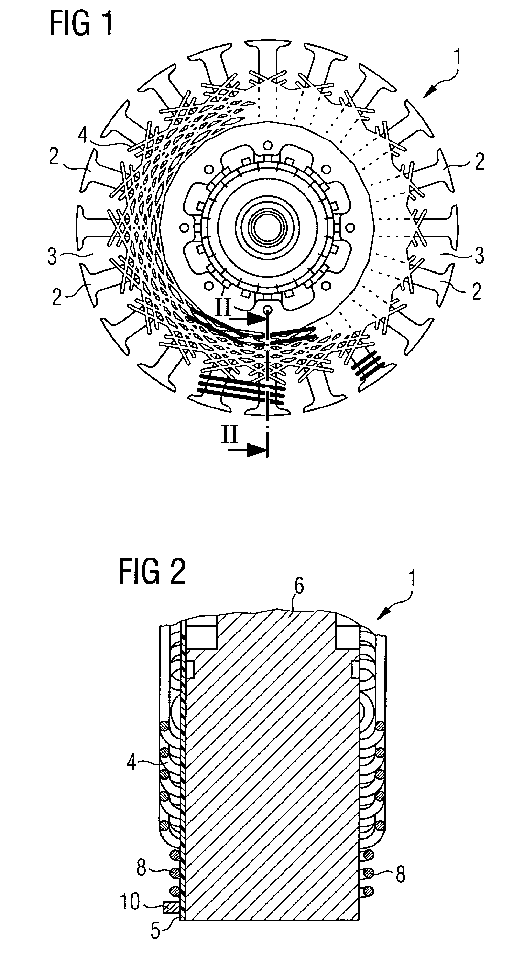

In FIG 1 ist eine Ausführung des Rotors 1 in einer Draufsicht abgebildet. Der Rotor 1 weist sternförmig angeordnete Paketarme 2 auf, die zwischen sich Nuten 3 ausbilden. An diesen Paketarmen 2 ist die Motorwicklung 4 angebracht. Wie in der einen Schnitt durch den Rotor 1 zeigenden FIG 2 abgebildet, liegt ein Isolierendstern 5 auf der Rotoroberfläche auf, so dass er diese einschließlich der Paketarme 4 und Nuten 3 abdeckt. Mit anderen Worten ist die Motorwicklung 4 nicht direkt auf die Paketarme 2 aufgewickelt. Vielmehr ist die komplette Motorwicklung 4 gegenüber dem Rotorkern 6 (Eisenkern) durch ein zusätzliches aufgestecktes bzw. aufgeklebtes isolierendes Bauteil, den vorzugsweise aus einem Kunststoff hergestellten Isolierendstern 5, isoliert.

In den abgebildeten Figuren sind zu Illustrationszwecken verschiedene Arten von Ausgleichswicklungen dargestellt. So sind Ausgleichwicklungen abgebildet, die ein oder mehrere Paketarme 4 umwickeln und als außenliegende Ausgleichswicklungen 7, 8 ausgebildet sind. Diese außenliegenden Ausgleichswicklungen 7, 8 sind nach dem Anbringen der Motorwicklung 4 und dem Messen einer tatsächlichen Unwucht angebracht worden. Die Enden 9 jeder Ausgleichswicklung 7, 8 sind vorzugsweise an einem an dem Isolierendstern 5 angebrachten Halteelement 10 angebracht. Dieses Halteelement 10 kann domartig aus dem Isolierendstern an der Rotoroberfläche oder im Nutbereich herausragen. An Stelle dieses Halteelementes 10 kann beispielsweise auch eine durch den Isolierendstern oder das Rotorpaket ausgebildete Klammer verwendet werden, in der der Wicklungsdraht der Ausgleichswicklung 7, 8 eingehängt wird.

Darüber hinaus sind innenliegende Ausgleichswicklungen 11, 12 abgebildet, welche wiederum an einem oder mehreren Paketarmen 2 angebracht sein können. Diese innenliegenden Ausgleichswicklungen 11, 12 werden vor dem Anbringen der Motorwicklung 4 zum Ausgleichen einer zu erwartenden Unwucht angebracht.

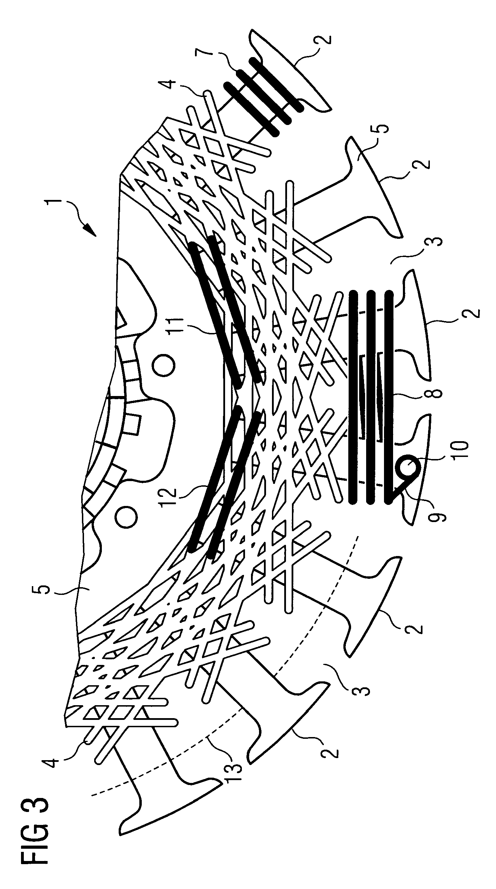

Ein Fixieren der Motorwicklung 4 an dem Rotorkern 6 kann durch ein vorzugsweise umlaufendes Anbringen einer Ausgleichswicklung 13 erfolgen, wie dies beispielhaft und schematisch vereinfacht in FIG 3 durch eine durchbrochene Linie dargestellt ist. Hiermit werden die Nuten 3 zwischen den Paketarmen 4 praktisch abgesperrt und somit verhindert, dass einzelne Drähte der Motorwicklung 4 bei hohen Drehzahlen über den Nutausgang hinausgehend den Rotor 1 verlassen.

Vorzugsweise erfolgt das Anbringen der die Motorwicklung 4 fixierenden Ausgleichswicklung 14 derart, dass diese wenigstens einmal um den kompletten Rotor 1 umlaufend gewickelt wird, wobei sie die Paketarme 4 abwechselnd oberhalb und unterhalb passiert. Die eigentliche Ausgleichswicklung zum Ausgleichen der Unwucht erfolgt dann an der entsprechenden vorbestimmten Stelle durch mehrfaches Umwickeln eines Paketarmes 4.

Die Ausgleichswicklung 7, 8, 11, 12, 13 kann mit unterschiedlichen Drahtstärken erfolgen. Vorzugsweise werden jedoch die gleiche Drahtstärke und das gleiche Material wie für die Motorwicklung 4 verwendet.

## Patentansprüche

1. Verfahren zum Wuchten eines Rotors (1) für einen elektromotorischen Antrieb, **gekennzeichnet durch** das Anbringen einer elektrisch wirkungslosen Ausgleichswicklung (7, 8, 11, 12, 13) an dem Rotor (1).

2. Verfahren nach Anspruch 1, **dadurch gekennzeichnet, dass** das Anbringen der Ausgleichswicklung (7, 8, 11, 12, 13) automatisch erfolgt.

3. Verfahren nach Anspruch 1 oder 2, **dadurch gekennzeichnet, dass** das Anbringen der Ausgleichswicklung (7, 8, 11, 12, 13) nach einem Messen einer tatsächlichen Unwucht erfolgt.

4. Verfahren nach Anspruch 1 oder 2, **dadurch gekennzeichnet, dass** das Anbringen der Ausgleichswicklung (7, 8, 11, 12, 13) vor dem Anbringen einer Motorwicklung (4) zum Ausgleichen einer zu erwartenden Unwucht erfolgt.

5. Verfahren nach einem der Ansprüche 1 bis 4, **dadurch gekennzeichnet, dass** die Enden (9) der Ausgleichswicklung (7, 8, 11, 12, 13) an einem Isolierendstern (5) oder einer ähnlichen Haltevorrichtung angebracht sind.

6. Verfahren nach einem der Ansprüche 1 bis 5, **dadurch gekennzeichnet, dass** durch das Anbringen der Ausgleichswicklung (7, 8, 11, 12, 13) ein Fixieren einer Motorwicklung (4) an einem Rotorkern (6) erfolgt.

7. Verfahren nach einem der Ansprüche 1 bis 6, **dadurch gekennzeichnet, dass** das Anbringen der Ausgleichswicklung (7, 8, 11, 12, 13) mit einem für eine Motorwicklung (4) verwendeten oder ähnlichem Material erfolgt.

8. Vorrichtung zum Wuchten eines Rotors (1) für einen elektromotorischen Antrieb, **dadurch gekennzeichnet, dass** sie zum Anbringen einer elektrisch wirkungslosen Ausgleichswicklung (7, 8, 11, 12, 13) ausgebildet ist.

9. Vorrichtung nach Anspruch 8, **dadurch gekennzeichnet, dass** sie zugleich zum Anbringen einer Motorwicklung (4) ausgebildet ist.

10. Rotor (1) für einen elektromotorischen Antrieb, **gekennzeichnet durch** eine elektrisch wirkungslose Ausgleichswicklung (7, 8, 11, 12, 13).
